# EUROPEAN PATENT APPLICATION

(11) **EP 4 261 713 A1**
(43) Date of publication of application: **18.10.2023**
(21) Application number: 21917190.7
(22) Date of filing: 19.11.2021
(51) Int. Cl.: G06F 21/10

(54) **LICENSE FILE MANAGEMENT METHOD AND APPARATUS, AND DEVICE**

(30) Priority: 08.01.2021 CN 202110022205
(71) Applicant: Huawei Technologies Co., Ltd., Shenzhen, Guangdong 518129 (CN)
(72) Inventor: LIN, Xiaoyong, Shenzhen, Guangdong 518129 (CN); XU, Junbin, Shenzhen, Guangdong 518129 (CN); YE, Jin, Shenzhen, Guangdong 518129 (CN)
(74) Representative: Maiwald GmbH
(86) International application number: PCT/CN2021/131828
(87) International publication number: WO 2022/148149

(57) **Abstract**

This application discloses a license file management method and apparatus, and a device. The method includes: obtaining license file information by parsing a license file obtained from a secure storage area; reading a cumulative running duration of a first device from a confidential file, where the cumulative running duration of the first device refers to a cumulative value of a valid running time of the first device that is used by a user within license authorization expiration; and if the cumulative running duration of the first device is within a license authorization running duration, verifying authenticity of a first ESN, where when a verification result of the first ESN is true, license authorization activation of the first device succeeds. This method verifies validity of the license file based on the cumulative running duration of the device. This effectively prevents the user from extending the expiration of the license file by modifying a system time or deleting the confidential file.

## Description

This application claims priority to Chinese Patent Application No. 202110022205.X, filed with the China National Intellectual Property Administration on January 8, 2021 and entitled "LICENSE FILE MANAGEMENT METHOD AND APPARATUS, AND DEVICE", which is incorporated herein by reference in its entirety.

### TECHNICAL FIELD

This application relates to the field of authentication and authorization technologies, and in particular, to a license file management method and apparatus, and a device.

### BACKGROUND

Aboard device is a combination of software and hardware and is sold to a customer for use as a whole device. For promotion of the marketing, a specific trial period of the device needs to be provided for the customer before the board device is sold. After trial use of the board device is offered to the customer, it may be promoted and used as a formal product for long-time only when the customer satisfaction is reached. If an original intention of the trial use is violated, sale of the formal product may be affected. Therefore, a license management method for the board device is required to authorize a trial period of the device to the customer.

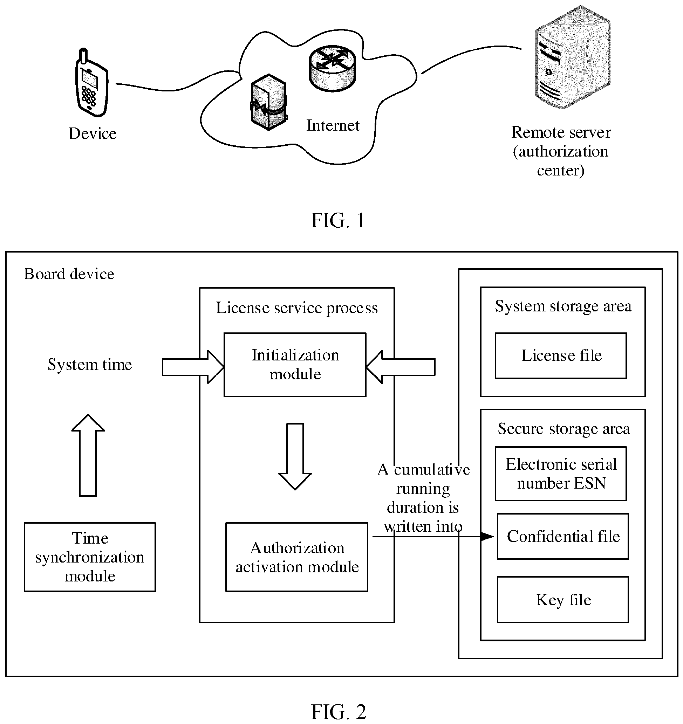

At present, a common license authorization (License Authorization, LIC) manner is usually network authorization. For example, as shown in FIG. 1, an authorization center, for example, a remote server, is mainly used to perform license authorization on a software application on the board device through the Internet. Specifically, the remote server first parses license information reported by the board device, and controls a validity period and a data processing amount of a program based on the license information. If the program expires, the remote server does not authorize a license to the customer to use the program, and may send a prompt to indicate to exist the program. However, in some cases, the board device needs to provide license authorization for the customer even when a network is unavailable. In this way, a limitation on a validity period of a license file depends on a system time recorded by the board device. However, the system time may be modified randomly. As a result, the customer may extend the trial period of the board device only by modifying the system time.

Therefore, to prevent the system time from being tampered with in an offline state, in a process of authorizing use of the board device, a system may shield an operation authority that may affect security of license authorization, for example, shield a serial number information and a modification channel of the system time. However, shielding the operation authority such as the modification channel of the system time may limit use and construction of the device in many other scenarios. For example, after the modification channel of the system time is shielded, some functions (for example, software secondary development) that are used to debug the device by modifying the system time may not be implemented. As a result, a method of shielding the operation authority to improve security of authorizing the use of the board device is not flexible.

### SUMMARY

This application provides a license file management method and apparatus, and a device, to perform authorization on a valid period of a license file of a board device when a network is unavailable for the board device, and prevent a user from changing license authorization expiration of the device by modifying a system time or in other ways. Specifically, this application discloses the following technical solutions:

According to a first aspect, this application provides a license file management method. The method may be applied to a service process, for example, a first service process, where the service process is a process in an operating system, and the method includes: obtaining license file information by parsing a license file obtained from a secure storage area; reading a cumulative running duration of a first device from a confidential file, where the cumulative running duration of the first device refers to a cumulative value of a valid running time of the first device that is used by a user within license authorization expiration; and if the cumulative running duration of the first device is within a license authorization running duration, verifying authenticity of a first ESN, where when a verification result of the first ESN is true, license authorization activation of the first device succeeds.

The license file may be obtained from the secure storage area. Further, the license file information includes information such as the license authorization running duration, the license authorization expiration, and the first ESN.

In addition, the secure storage area includes but is not limited to an RPMB, HSM, a TEE, and the like.

According to the method provided in this aspect, the cumulative running duration of the device is stored in the confidential file, and the confidential file makes a cumulative record of a running time of the device at an interval (several seconds or several minutes). In a trial period of a single version of the device, license authorization is allowed to be activated only when the cumulative time is within a range of the license authorization running duration. Otherwise, the license authorization may not be successfully activated. The license authorization is not allowed to be activated even if the license authorization does not expire. This prevents the user from bypassing a validity check of the license file by modifying a system time or deleting the confidential file, so that the device may be used for a long time. This method improves security of authorization and use of the license file.

In addition, this method is not limited by a case that shielding a modification channel of the system time affects use and construction of some functions in the device, and flexibility of the device is improved.

With reference to the first aspect, in a possible implementation of the first aspect, the verifying authenticity of a first ESN includes: determining whether a second ESN obtained from the secure storage area matches the first ESN; and if the second ESN obtained from the secure storage area matches the first ESN, determining that the verification result of the first ESN is true.

In this implementation, an ESN is used to verify whether the license authorization activation of the first device succeeds. Because the ESN is a unique identifier for identifying a physical hardware device, in a license activation process, the authenticity of the first ESN may be accurately determined by checking whether ESN information stored in the license file matches an ESN of the hardware device.

With reference to the first aspect, in another possible implementation of the first aspect, before the reading a cumulative running duration of a first device from a confidential file, the method further includes: obtaining a system running time of the first device; determining whether the system running time of the first device is within the license authorization expiration; and if the system running time of the first device is within the license authorization expiration, reading the cumulative running duration of the first device from the confidential file, where the confidential file is stored in the secure storage area, and the file in the secure storage area is allowed to be read, but is not allowed to be written or modified.

In this implementation, the cumulative running duration of the device is recorded and periodically updated, and this information is written into the confidential file. The confidential file is stored in the secure storage area of the device. The authentication is required for a writing operation of the confidential file, and a common user does not have an authority to write or delete the confidential file. Therefore, in a license activation procedure and a procedure in which an automatic check is performed on expiry, whether the license file authorization expires is determined based on determining of whether the cumulative running duration of the license exceeds the valid running time rather than based on the system time of the device. This may not only prevent a vulnerability that the user reactivates an expired license file by modifying the system time to a range from a valid start time to a valid end time of the license, but also fix a vulnerability in an existing solution in which the user reactivates the expired license file by deleting the confidential file and changing the system time.

With reference to the first aspect, in still another possible implementation of the first aspect, the method further includes: if the cumulative running duration of the first device is not within the license authorization running duration, or when the verification result of the first ESN is false in a process of verifying the authenticity of the first ESN, determining that the license authorization activation of the first device fails in the foregoing two cases.

With reference to the first aspect, in still another possible implementation of the first aspect, the reading a cumulative running duration of a first device from a confidential file includes: when determining that a license authorization activation procedure of the first device is non-first-time activation, reading the cumulative running duration of the first device from the confidential file.

With reference to the first aspect, in still another possible implementation of the first aspect, the license file information further includes license version information; and the determining that a license authorization activation procedure of the first device is non-first-time activation includes: checking, based on the license version information in the license file information, whether the license authorization activation procedure of the first device is first-time activation; and if the confidential file is stored in the secure storage area, and license version information recorded in the confidential file is consistent with the license version information in the license file information, determining that the license authorization activation procedure of the first device is the non-first-time activation.

In this implementation, a difference between the first-time activation and the non-first-time activation lies in that the first-time activation is a procedure executed by the device during first-time activation for use, and the non-first-time activation is a procedure executed by the device during non-first-time activation for use. A purpose of distinguishing between the first-time activation and the non-first-time activation is to better record the cumulative running duration of the device, where the cumulative running duration of the device is recorded in the confidential file. If the confidential file stored in the secure storage area does not exist, or the version information, of the license file, that is recorded in the confidential file is inconsistent with current version information obtained by parsing the license file, the first-time activation procedure begins. A main purpose of the first-time activation is to record the cumulative running duration, of the device, that is stored in the confidential file from zero. A purpose of the non-first-time activation is to make a cumulative record of the cumulative running duration, of the device, that is stored in the confidential file.

With reference to the first aspect, in still another possible implementation of the first aspect, when it is determined that the license authorization activation procedure of the first device is first-time activation, a confidential file in the secure storage area is created, and the cumulative running duration of the first device in the created confidential file is stored.

With reference to the first aspect, in still another possible implementation of the first aspect, before the obtaining license file information by parsing a license file obtained from a secure storage area, the method further includes: checking whether the license file is valid; and when the license file is valid, parsing the license file to obtain the license file information.

With reference to the first aspect, in still another possible implementation of the first aspect, the checking whether the license file is valid includes: performing signature verification on signature data by using a key obtained from the secure storage area, where the signature data is data obtained after the license file is encrypted; and if a signature verification result is consistent with original data included in the license file, the license file is valid.

In this implementation, before the license authorization activation procedure is executed, validity of the license file is checked, to prevent the license file from being invalid. In addition, this also prevents the user from bypassing the validity check of the license file by modifying the system time or deleting the confidential file.

With reference to the first aspect, in still another possible implementation of the first aspect, after that license authorization activation of the first device succeeds, the method further includes: updating the cumulative running duration of the first device; and recording an updated cumulative running duration of the first device in the confidential file. In this implementation, the cumulative running duration of the device is updated in real time, and the updated cumulative running duration of the device is stored in the confidential file. On one hand, the cumulative running duration of the device may be quickly obtained when the license authorization activation procedure is executed, and this improves efficiency of license authorization of the license file. On the other hand, the cumulative running duration is stored in the confidential file, so that the cumulative running duration may be prevented from being stolen or modified, and this improves storage security of the cumulative running duration of the first device.

According to a second aspect, this application provides a license file management apparatus, where the apparatus includes: a parsing module, configured to: obtain license file information by parsing a license file obtained from a secure storage area, where the license file information includes: a license authorization running duration, license authorization expiration, and a first electronic serial number ESN;
an obtaining module, configured to read a cumulative running duration of a first device from a confidential file, where the cumulative running duration of the first device refers to a cumulative value of a valid running time of the first device that is used by a user within the license authorization expiration; and
a processing module, configured to: when the cumulative running duration of the first device is within the license authorization running duration, verify authenticity of the first ESN; and when a verification result of the first ESN is true, determine that license authorization activation of the first device succeeds.

With reference to the second aspect, in a possible implementation of the second aspect, the processing module is further configured to determine whether a second ESN obtained from the secure storage area matches the first ESN; and if the second ESN obtained from the secure storage area matches the first ESN, determine that the verification result of the first ESN is true.

With reference to the second aspect, in another possible implementation of the second aspect, the obtaining module is further configured to: before reading the cumulative running duration of the first device from the confidential file, obtain a system running time of the first device, and determine whether the system running time of the first device is within the license authorization expiration; and if the system running time of the first device is within the license authorization expiration, read the cumulative running duration of the first device from the confidential file.

With reference to the second aspect, in still another possible implementation of the second aspect, the processing module is further configured to: when the cumulative running duration of the first device is not within the license authorization running duration, or when the verification result of the first ESN is false in a process of verifying the authenticity of the first ESN, determine that the license authorization activation of the first device fails.

With reference to the second aspect, in still another possible implementation of the second aspect, the processing module is further configured to: when determining that a license authorization activation procedure of the first device is non-first-time activation, read the cumulative running duration of the first device from the confidential file through the obtaining module.

With reference to the second aspect, in still another possible implementation of the second aspect, the license file information further includes license version information; and the processing module is further configured to: check, based on the license version information in the license file information, whether the license authorization activation procedure of the first device is first-time activation; and if the confidential file is stored in the secure storage area, and license version information recorded in the confidential file is consistent with the license version information in the license file information, determine that the license authorization activation procedure of the first device is the non-first-time activation.

With reference to the second aspect, in still another possible implementation of the second aspect, the processing module is further configured to: when determining that the license authorization activation procedure of the first device is the first-time activation, create a confidential file in the secure storage area, and store the cumulative running duration of the first device in the created confidential file.

With reference to the second aspect, in still another possible implementation of the second aspect, the parsing module is further configured to: before obtaining the license file information by parsing the license file obtained (from the secure storage area), check whether the license file is valid.

With reference to the second aspect, in still another possible implementation of the second aspect, the parsing module is further configured to perform signature verification on signature data by using a key obtained from the secure storage area, where if a signature verification result is consistent with original data included in the license file, the license file is valid; and the signature data is data obtained after the license file is encrypted.

With reference to the second aspect, in still another possible implementation of the second aspect, the apparatus further includes: an updating module, configured to: after that license authorization activation of the first device succeeds, update the cumulative running duration of the first device, where the processing module is further configured to record an updated cumulative running duration of the first device in the confidential file.

According to a third aspect, this application further provides a board device. The board device may be a terminal device or a network device, and includes a processor and a memory, where the processor is coupled to the memory.

The memory is configured to store computer program instructions, and the processor is configured to execute the instructions stored in the memory, so that the board device performs the method according to the first aspect and the implementations of the first aspect.

Optionally, the processor and the memory may be integrated into a chip system. The chip system further includes an input/output interface, and the input/output interface is configured to implement communication between the chip system and another external module.

Optionally, the processor is a logic circuit.

According to a fourth aspect, this application further provides a computer-readable storage medium. The storage medium stores instructions, so that when the instructions are run on a computer or a processor, the instructions may be used to perform the method according to the first aspect and the implementations of the first aspect.

In addition, this application further provides a computer program product. The computer program product includes computer instructions; and when the instructions are executed by a computer or a processor, the method according to the first aspect and the implementations of the first aspect may be implemented.

It should be noted that beneficial effects corresponding to the technical solutions of the implementations of the second aspect to the fourth aspect are the same as beneficial effects of the first aspect and the implementations of the first aspect. For details, refer to descriptions of the beneficial effects of the first aspect and the implementations of the first aspect. Details are not described again.

### BRIEF DESCRIPTION OF DRAWINGS

FIG. 1 is a schematic diagram of a structure of authorizing, by a remote server, a use license to a board device according to this application;
FIG. 2 is a schematic diagram of a structure of a board device according to an embodiment of this application;
FIG. 3 is a schematic diagram of a structure of an eMMC according to an embodiment of this application;
FIG. 4 is a schematic diagram of a license startup and check procedure according to an embodiment of this application;
FIG. 5 is a schematic diagram of execution and check of a license activation procedure according to an embodiment of this application;
FIG. 6A and FIG. 6B are a schematic diagram of a license authorization activation procedure according to an embodiment of this application;
FIG. 7 is a schematic diagram of a cumulative running duration of a device according to an embodiment of this application;
FIG. 8 is a schematic diagram of a confidential file writing procedure according to an embodiment of this application;
FIG. 9 is a schematic diagram of a structure of a license file management apparatus according to an embodiment of this application; and
FIG. 10 is a schematic diagram of a structure of a board device according to an embodiment of this application.

### DESCRIPTION OF EMBODIMENTS

The following describes technical solutions in embodiments of this application in detail with reference to the accompanying drawings. Before the technical solutions in embodiments of this application are described, an application scenario in embodiments of this application is first described with reference to the accompanying drawing.

The technical solutions of this application relate to a board device. The board device provides a license authorization service for a customer application in a case in which a single device is not connected to a network (or referred to as offline).

Optionally, the board device may also be referred to as a no networking device (No Networking Device, NND).

The board device may be a network device, such as a computing unit or a server. In addition, the board device may alternatively be a terminal device. The terminal device may be a portable device, for example, a mobile phone, a notebook computer, a tablet computer, a personal computer (personal computer, PC), a personal digital assistant (personal digital assistant, PDA), a collapsible terminal, a vehicle-mounted terminal, a wearable device (for example, a smart watch or a band) with a wireless communication function, a user device (user device) or user equipment (user equipment, UE), and an augmented reality (augmented reality, AR) or virtual reality (virtual reality, VR) device. A specific device form of the terminal device is not limited in embodiments of this application. In addition, the foregoing various terminal devices include but are not limited to terminal device running an Apple (IOS) system, an Android (Android) system, a Microsoft (Microsoft) system, or another operating system.

FIG. 2 is a schematic diagram of a structure of a terminal device according to an embodiment. The device includes a processing area and a storage area, where the processing area includes a time synchronization module, an initialization module, an authorization activation module, and the like. The storage area includes a system storage area and a secure storage area, where the system storage area is configured to store a license (License) file. The secure storage area is configured to store information such as an electronic serial number (Electronic Serial Number, ESN), a confidential file (Confidential File, CF), and a key file.

A license (License) is a form of agreement in which a supplier authorizes a use scale and an expiration of a sold product, and a customer is authorized to the use scale and the expiration of the purchased product. The license is usually recorded in a license file. For example, license authentication information and a program are packaged and installed on a device. After installation, the license file is formed. The license file may be stored and transferred. For example, the license file may be stored in disk space of a system.

The license file may also be referred to as license authorization information, and is used to authorize use of the system. Further, content of the license file includes: version information of the license file, a license type, a start date of license authorization, an expiry date of the license authorization, a quantity of valid use days, an ESN, license signature data, and the like.

The ESN is a unique identifier used to identify a physical hardware device. The ESN is usually stored in the secure storage area or a secure storage medium of the hardware device. In a license activation process, the ESN is used to check whether ESN information stored in the license file matches the ESN of the hardware device.

The key file is used to store public key data of the license file. When generating the license file, the system may use a private key generated by the system to sign the content of the license file and attach a signature to the license file. When the license file is issued, the key file may be written into the secure storage area of the system. In the license activation process, the key file is used to perform an integrity check on the license file, to determine whether the license file is valid. To ensure security of the key file, the key file stored in the secure storage area is allowed to be read, but is not allowed to be modified or deleted.

The confidential file is generated after the license file is validly authorized. Content of the confidential file includes: recording version information of a license file that has been authorized or is being authorized, a quantity of valid use days of the license, and a cumulative value of a valid running time of the device (or referred to as a cumulative running duration of the device), and the like. The confidential file makes a cumulative record of a running time of the device at an interval (several seconds or several minutes). In a trial period of a single version of the device, license authorization is allowed to be activated only when the cumulative running duration is within a width range of a license expiration. Otherwise, the license authorization may not be successfully activated. The license authorization is not allowed to be activated even if the license authorization does not expire.

In addition, the confidential file may alternatively be stored in the secure storage area of the system to prevent the confidential file from being maliciously modified or deleted, and prevent a user from obtaining an invalidly authorized use license by modifying a system time. In addition, writing or deleting the confidential file requires authentication. Only a specific process (such as a license service process) has an authority to write data of the confidential file.

The system time is used to check the start date and the expiry date of the license authorization of the license file. The system time may be used to perform timing and calibration through the time synchronization module.

At a hardware layer, this embodiment provides an embedded multimedia card (Embedded Multimedia Card, eMMC). The eMMC may be configured to store the foregoing license file, key file, confidential file, and the like, where the eMMC integrates a controller during packaging to provide a standard interface and manage a flash memory. The eMMC includes an embedded storage solution with a multimedia card (Multimedia Card, MMC) interface, a flash memory device, and a main controller. An interface speed is up to 400 MBytes per second. The eMMC has performance of speediness and upgradability.

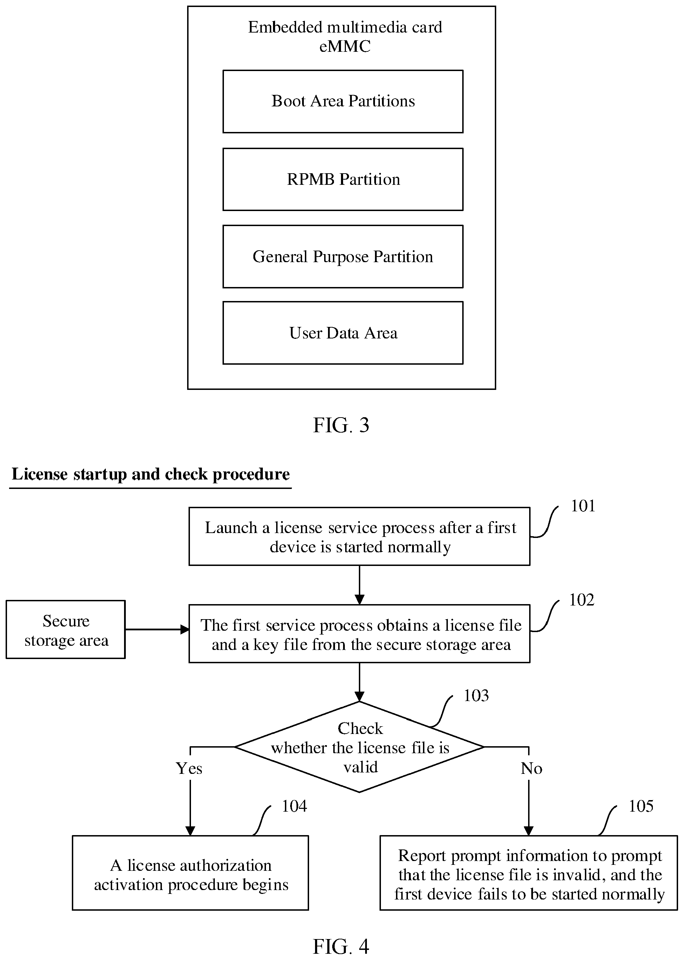

As shown in FIG. 3, the eMMC includes a plurality of partitions, for example, a boot area partition (Boot Area Partition), an RPMB (Replay Protected Memory Block) partition, a general-purpose partition (General-Purpose Partition), and a user data area (User Data Area). In addition, more or fewer other partitions may be further included. This is not limited in this embodiment.

The RPMB partition is the secure storage area shown in FIG. 2, and may be used to store the confidential file, the key file, the ESN, and the like. When data is written into the RPMB partition of the eMMC, validity of the data is checked first, and only a specified host (Host) has an authority to write the data. In addition, when the data is read, a signature mechanism is provided to ensure that the data read by the host is internal data of the RPMB instead of data forged by an attacker.

Optionally, the license file may alternatively be stored in another storage area in the RPMB, for example, a system storage area.

It should be understood that the secure storage area shown in FIG. 2 may alternatively be another storage medium or storage unit, for example, hierarchical storage management (Hierarchical Storage Management, HSM) or a trusted execution environment (Trusted Execution Environment, TEE), where the TEE may be understood as an area that is isolated from another module in a system on chip (System on Chip, SoC) and that can execute a trusted application (TA). A specific form and structure of the secure storage area are not limited in this embodiment.

To meet a requirement of a user for device trial use, this embodiment provides a license management method for a board device. The method includes the following procedures: a license startup and check procedure, execution and check of a license activation procedure, a license authorization activation procedure, and a confidential file writing procedure.

The following describes in detail specific steps of the foregoing four procedures.

In this embodiment, a first device is used as an example, and the first device is any one of the foregoing board devices. A time synchronization module is configured to perform time calibration on a time of an operating system of the device in advance, to prevent the user from maliciously modifying the system time. If the time synchronization module is invalid, the confidential file may also prevent the user from modifying the system time, so that an authorization expiration is extended.

After the first device is started, the "license startup and check procedure" begins. The procedure mainly verifies validity and integrity of the license file, to ensure security and reliability of the license file. Specifically, as shown in FIG. 4, the "license startup and check procedure" includes the following method steps.

101: An operating system of a first device launches a license service process, for example, a first service process, after the first device is started normally.

102: The first service process obtains a license file and a key file from a secure storage area.

The license file is also referred to as license authorization information, and is used to authorize use of the system. Content of the license file includes: version information of the license file, a license type, a start date of license authorization, an expiry date of the license authorization, a quantity of valid use days, a first ESN of the first device, license signature data, and the like.

The license type is used to indicate whether the license file is a temporary license file or a permanent license file.

The key file includes a public key and a private key. When generating the license file, the system may encrypt the content (or referred to as license original data) of the license file by using the private key to obtain signature data, and then attach the signature data to the license file. When the license file is issued, the system writes the key file into the secure storage area (such as an RPMB) of the system. The key file stored in the secure storage area is allowed to be read, but is not allowed to be modified or deleted.

The secure storage area is specific disk space of the system, and includes but is not limited to an RPMB, HSM, a TEE, and the like. A structure and a size of the secure storage area are not limited in this embodiment.

103: Check whether the license file is valid.

The first service process obtains the license original data and the signature data from the license file, and performs signature verification on the signature data by reading the public key stored in the secure storage area during check. If the signature verification succeeds, it is determined that the license file is valid; or if the signature verification fails, it is determined that the license file is invalid. In a possible implementation, the first service process decrypts the signature data by using the public key in the secure storage area, decrypts the data, and compares whether the decrypted data is the same as the license original data. If the decrypted data is the same as the license original data, it is determined that the license file is valid, and step 104 is performed; or if the decrypted data is different from the license original data, it is determined that the license file is invalid, and step 105 is performed.

Step 103 is also referred to as an integrity check of the license file.

104: If the license file is valid, a license authorization activation procedure begins.

105: If the license file is invalid, the first service process reports prompt information, where the prompt information is used to prompt that the license file is invalid. In this case, the first device fails to be started normally.

After step 104 is performed, the "license authorization activation procedure" begins. Before the "license authorization activation procedure" begins, whether the activation procedure is first-time activation or non-first-time activation needs to be first determined, and "execution and check of the license activation procedure" begins.

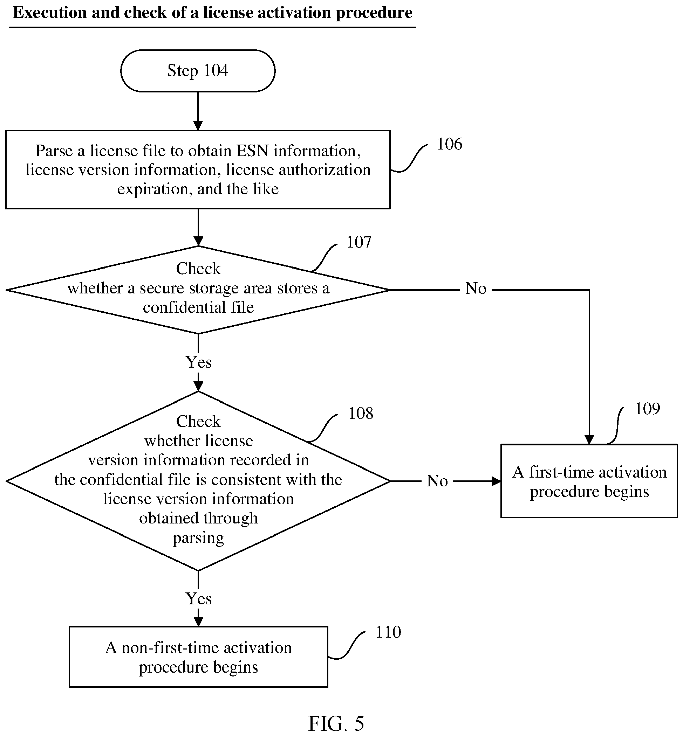

A difference between the first-time activation and the non-first-time activation lies in that the first-time activation is a procedure executed by the device during first-time activation for use, and the non-first-time activation is a procedure executed by the device during non-first-time activation for use. A purpose of distinguishing between the first-time activation and the non-first-time activation is to better record a cumulative running duration (cumulative running duration, CRT) of the device, where the cumulative running duration of the device is recorded in a confidential file. If the confidential file stored in the secure storage area does not exist, or the version information, of the license file, that is recorded in the confidential file is inconsistent with current version information obtained by parsing the license file, the first-time activation procedure begins. A purpose of the first-time activation is to record the cumulative running duration, of the device, that is stored in the confidential file from zero. A purpose of the non-first-time activation is to make a cumulative record of the cumulative running duration, of the device, that is stored in the confidential file. Specifically, as shown in FIG. 5, the method steps are as follows:

106: After the license file is verified to be valid and the first device is started normally, the license service process parses the license file read from the secure storage area and obtains license file information through parsing, where the license file information includes information such as ESN information (for example, the first ESN), the license version information, the license type, a license authorization running duration, the start date of the license authorization, the expiry date of the license authorization, and the quantity of valid use days.

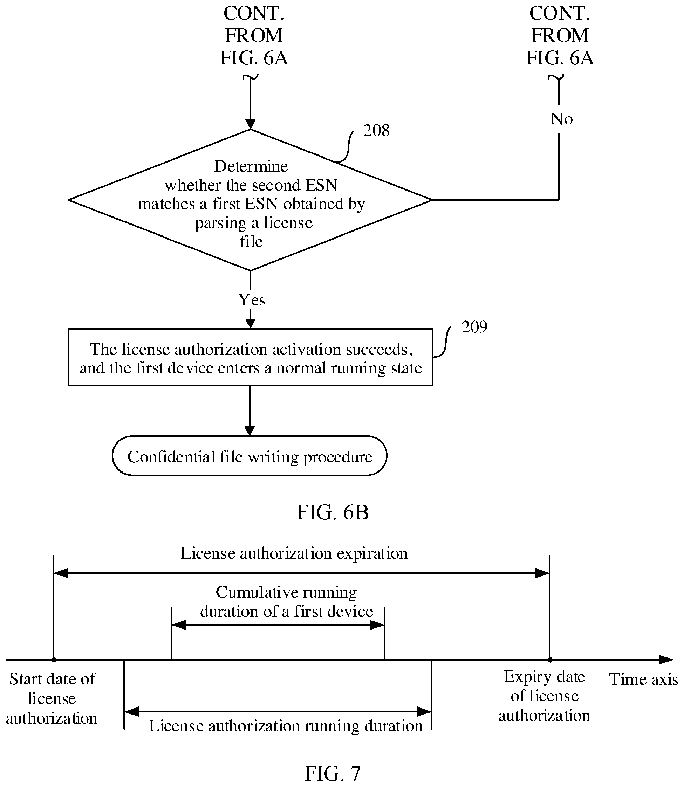

License authorization expiration may be determined based on the start date and the expiry date of the license authorization, where the license authorization expiration is a specific period of time during which a user is authorized to use the device. For example, if authorization is from January 1, 2020 to January 1, 2021, as shown in FIG. 7, the license authorization expiration = the expiry date of the license authorization - the start date of the license authorization.

The license authorization running duration refers to a maximum time during which a user is allowed to use the device within the license authorization expiration. The license authorization running duration may be customized by the system. For example, if the license authorization expiration is 365 days and the license authorization running duration is 60 days, it indicates that the authorization may be used for 60 days within the 365-day authorization expiration, and maximum use duration that is allowed per day in the 60 days is 8 hours.

Step 106 may be performed when the validity of the license file is verified in step 103, or may be performed after step 104. This is not limited in this embodiment.

107: Check whether the secure storage area stores the confidential file. If yes, to be specific, the secure storage area stores the confidential file, a next step begins and step 108 is performed; or if no, to be specific, the secure storage area does not store the confidential file, step 109 is performed, and the first-time activation procedure begins.

108: After it is determined in step 107 that the secure storage area stores the confidential file, check whether the license version information recorded in the confidential file is consistent with the license version information obtained through parsing in step 106. If the license version information recorded in the confidential file is inconsistent with the license version information obtained through parsing in step 106, step 109 is performed, and the first-time activation procedure begins; or if the license version information recorded in the confidential file is consistent with the license version information obtained through parsing in step 106, step 110 is performed, and the non-first-time activation procedure begins.

After the "execution and check of the license activation procedure" (the first-time activation procedure and the non-first-time activation procedure) are performed, the specific "license authorization activation procedure" begins.

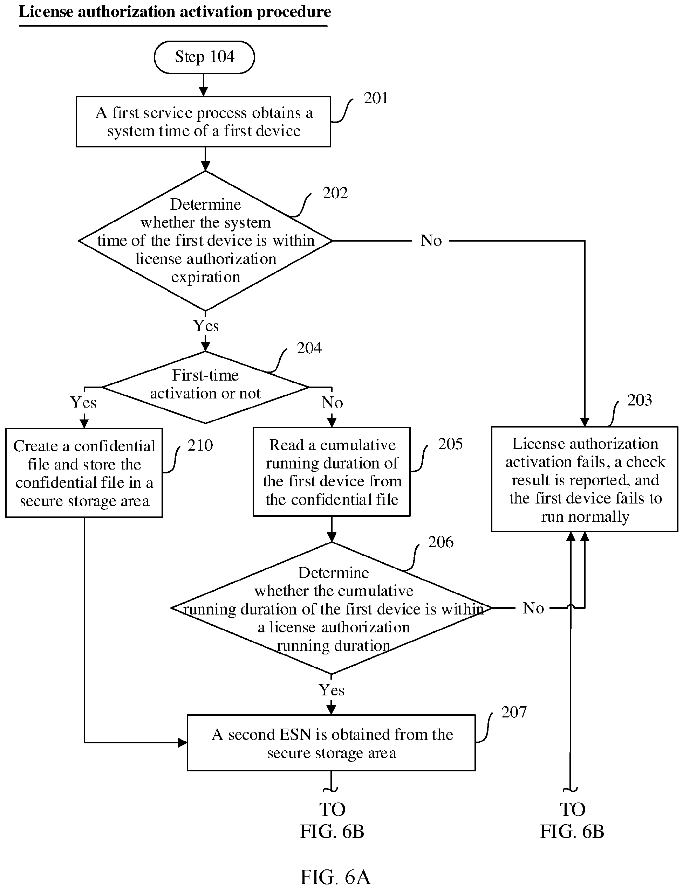

FIG. 6A and FIG. 6B are a schematic diagram of a license authorization activation procedure according to an embodiment of this application. The details are as follows:

In the foregoing step 103 or 106, the license file is parsed to obtain information such as the license authorization running duration, and the license authorization expiration.

201: The first service process obtains a system time of the first device. The system time is used to check the start date and the expiry date of the license authorization, and the system time is used to perform timing and calibration through a time synchronization module of the first device.

202: Determine whether the system time of the first device is within the license authorization expiration. If yes, to be specific, the system time of the first device is within the license authorization expiration, a selection procedure of the first-time activation and the non-first-time activation begins; or if no, to be specific, the system time of the first device is not within the license authorization expiration, step 203 is performed.

203: If no, to be specific, the system time of the first device is not within the license authorization expiration, the license authorization activation fails, and the first service process reports a check result. In this case, the first device fails to run normally.

204: The selection procedure of the first-time activation and the non-first-time activation is performed, to determine whether current activation is the first-time activation.

For a specific determining process, refer to the foregoing steps 106 to 110. According to the foregoing "execution and check of the license activation procedure", it may be determined whether the current activation is the first-time activation or the non-first-time activation. If the non-first-time activation is executed in a current procedure, step 205 is performed; or if the first-time activation is executed in the current procedure, step 210 is performed.

210: Create a confidential file in the secure storage area, and store the cumulative running duration of the first device in the created confidential file.

205: The first service process reads the recorded cumulative running duration of the first device from the confidential file in the secure storage area, for example, as shown in FIG. 7.

The cumulative running duration of the first device refers to a cumulative value of a valid running time of the first device that is used by a user within the license authorization expiration. The cumulative value of the valid running time is dynamic data. To be specific, a valid running time of the first device that is used by a user is recorded each time and added to a previous valid running time of the first device that is used by the user, to obtain the cumulative value of the valid running time.

Optionally, the confidential file is stored in the secure storage area (for example, an RPMB), and is only allowed to be read, but is not allowed to be modified or deleted. Only a specific process (such as a license service process) has an authority to write and delete data of the confidential file. This prevents the license file from being reactivated by modifying the system time after the confidential file is maliciously deleted.

In addition, the confidential file further includes information such as version information of a license file that has been authorized or is being authorized and a quantity of valid use days.

206: Determine whether the cumulative running duration of the first device is within the license authorization running duration. If the cumulative running duration of the first device is within the license authorization running duration, step 207 is performed. Otherwise, step 203 is performed.

For example, it is assumed that the cumulative running duration of the first device is N days (where N is a positive integer and is greater than or equal to 1), or (N x 24) hours when converted into hours. If the license authorization running duration is 60 days, it is determined whether N < 60 is satisfied, or whether (N x 24) ≤ (60 x 24) is satisfied when calculation is performed by hours. In the example shown in FIG. 7, if the cumulative running duration of the first device is within the license authorization running duration, step 207 is performed.

207: If yes, to be specific, the cumulative running duration of the first device is within the license authorization running duration, a second ESN is obtained from the secure storage area. The second ESN may be separately stored in the secure storage area rather than in the confidential file.

Optionally, if the current cumulative running duration of the first device is not within the license authorization running duration, for example, N > 60, the license authorization activation fails, and a check result is reported. In this case, the first device fails to run normally, which is the same as the foregoing step 203.

208: Determine whether the second ESN matches the first ESN obtained by parsing the license file.

209: If yes, to be specific, the second ESN is the same as the first ESN, the matching succeeds, and the license authorization activation succeeds. In this case, the first device enters a normal running state.

In addition, if no, to be specific, the second ESN is different with the first ESN, the matching fails, the license authorization activation fails, and the first service process reports a check result. In this case, the first device fails to run normally. This step is the same as the foregoing step 203, and details are not described again.

It should be noted that the license authorization running duration in step 206 is mainly for a device whose license is a temporary license. For a device with the temporary license, the license authorization running duration the license is a fixed value, for example, an authorized use time for the user is three months. For a device whose license is a permanent license, the license authorization running duration of the license is permanent. Therefore, before the foregoing step 206, the method further includes:
determining whether the license of the first device is a temporary license or a permanent license. If the device is a device with the temporary license, the cumulative running duration of the first device is obtained, and step 206 is performed. If the device is a device with the permanent license, the cumulative running duration of the first device is also obtained, and the foregoing step 206 is performed. In this case, the authorization running duration of the first device is permanent. Therefore a determining result of step 206 is always that "the cumulative running duration of the first device is within the license authorization running duration", and step 207 and a procedure after step 207 are directly performed. For details, refer to steps 207 to 209, and details are not described herein again.

Further, a license type of the first device may be determined based on the license type obtained by parsing the license file.

It should be noted that, a sequence of step 206 and step 208 may be interchanged, that is, step 208 is performed first, and step 206 is performed when a determining result of step 208 is that "the second ESN is the same as the first ESN". A sequence of performing step 206 and step 208 is not limited in this embodiment.

In this embodiment, the cumulative running duration of the device is stored in the confidential file, and the confidential file makes a cumulative record of a running time of the device at an interval (several seconds or several minutes). In a trial period of a single version of the device, license authorization is allowed to be activated only when the cumulative time is within a width range of the license authorization running duration. Otherwise, the license authorization may not be successfully activated. The license authorization is not allowed to be activated even if it does not expiry. This prevents the user from bypassing a validity check of the license file by modifying a system time or deleting the confidential file, so that the device may be used for a long time. This method improves security of authorization and use of the license file.

In addition, the method provided by this embodiment is not limited by a case that shielding a modification channel of the system time affects use and construction of some functions in the device, and flexibility of the device is improved.

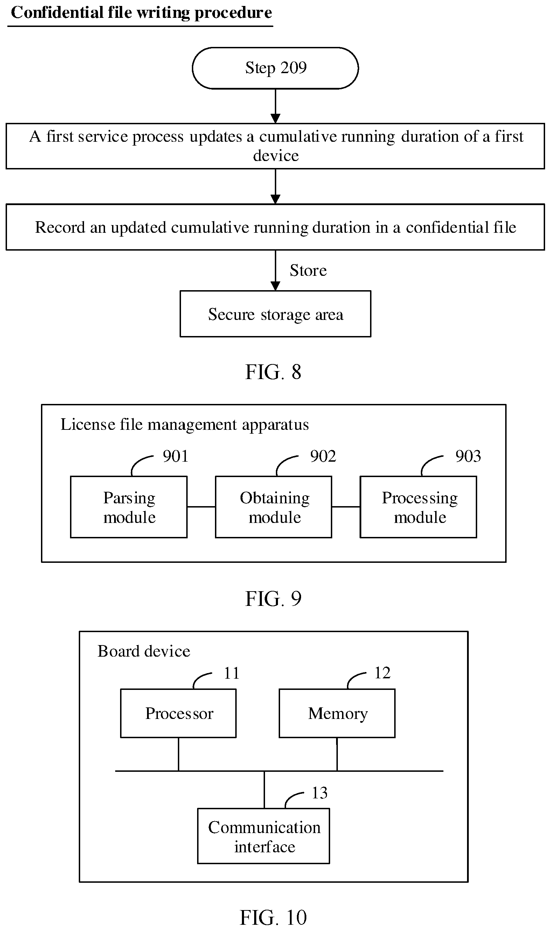

In addition, after the first device enters the normal running state in step 209, the method further includes a "confidential file writing procedure". Specifically, as shown in FIG. 8, the confidential file writing procedure includes:

The first service process updates the cumulative running duration of the first device, and records an updated cumulative running duration in the confidential file. Specifically, before recording the updated cumulative running duration, an identity of a writer further needs to be authenticated, and writing is allowed only after the authentication succeeds. For example, only a specified host is allowed to write.

A current running time of the first device is added to the cumulative running duration of the first device recorded in the confidential file at an interval, to obtain the updated cumulative running duration.

For example, the first device currently runs for eight hours, and the cumulative running duration of the first device recorded in the confidential file is 58 days. In this case, the updated cumulative running duration is 1400 hours (1400 = 58 x 24 + 8). Then, the updated cumulative running duration is recorded in the confidential file, and the key file is stored in the secure storage area.

In this method, the cumulative running duration of the device license is recorded and periodically updated, and this time information is written into the confidential file. The confidential file is stored in the secure storage area of the device. The authentication is required for a writing operation of the confidential file in the secure storage area, and a common user does not have an authority to write or delete the confidential file. Therefore, in a license activation procedure and a procedure in which an automatic check is performed on expiry, whether the license authorization expires may be determined based on determining of whether the cumulative running duration recorded in the confidential file exceeds the valid running time of the license file rather than based on the system time of the device. In this way, a vulnerability that the user may extend the license authorization expiration by changing the system time to reactivate an expired license file is fixed.

FIG. 9 is a schematic diagram of a structure of a license file management apparatus according to an embodiment of this application. The apparatus may be a board device, or a component located in the board device, for example, a chip or a chip system. In addition, the apparatus may implement the license file management method in the foregoing embodiments.

Specifically, as shown in FIG. 9, the apparatus may include a parsing module 901, an obtaining module 902, and a processing module 903. In addition, the apparatus may further include other units or modules such as a storage module, an updating module, and a sending module.

The parsing module 901 is configured to: obtain license file information by parsing a license file obtained from a secure storage area, where the license file information includes information such as a license authorization running duration, license authorization expiration, and a first ESN. The obtaining module 902 is configured to read a cumulative running duration of a first device from a confidential file, where the cumulative running duration of the first device refers to a cumulative value of a valid running time of the first device that is used by a user within the license authorization expiration. The processing module 903 is configured to: when the cumulative running duration of the first device is within the license authorization running duration, verify authenticity of the first ESN; and when a verification result of the first ESN is true, determine that license authorization activation of the first device succeeds.

Optionally, in a possible implementation of this embodiment, the processing module 903 is further configured to determine whether a second ESN obtained from the secure storage area matches the first ESN; and if the second ESN obtained from the secure storage area matches the first ESN, determine that the verification result of the first ESN is true.

Optionally, in another possible implementation of this embodiment, the obtaining module 902 is further configured to: before reading the cumulative running duration of the first device from the confidential file, obtain a system running time of the first device, and determine whether the system running time of the first device is within the license authorization expiration; and if the system running time of the first device is within the license authorization expiration, read the cumulative running duration of the first device from the confidential file.

Optionally, in still another possible implementation of this embodiment, the processing module 903 is further configured to: when the cumulative running duration of the first device is not within the license authorization running duration, or when the verification result of the first ESN is false in a process of verifying the authenticity of the first ESN, determine that the license authorization activation of the first device fails.

Optionally, in still another possible implementation of this embodiment, the obtaining module 902 is further configured to: when determining that a license authorization activation procedure of the first device is non-first-time activation, read the cumulative running duration of the first device from the confidential file through the obtaining module.

Optionally, in still another possible implementation of this embodiment, the license file information further includes license version information; and the processing module 903 is further configured to: check, based on the license version information in the license file information, whether the license authorization activation procedure of the first device is first-time activation; and if the confidential file is stored in the secure storage area, and license version information recorded in the confidential file is consistent with the license version information in the license file information, determine that the license authorization activation procedure of the first device is the non-first-time activation.

Optionally, in still another possible implementation of this embodiment, the processing module 903 is further configured to: when determining that the license authorization activation procedure of the first device is the first-time activation, create a confidential file in the secure storage area, and store the cumulative running duration of the first device in the created confidential file.

Optionally, in still another possible implementation of this embodiment, the parsing module 901 is further configured to: before obtaining the license file information by parsing the license file obtained from the secure storage area, check whether the license file is valid.

Further, the parsing module 901 is further configured to perform signature verification on signature data by using a key obtained from the secure storage area, where if a signature verification result is consistent with original data included in the license file, the license file is valid; and the signature data is data obtained after the license file is encrypted. If the signature verification result is inconsistent with the original data included in the license file, the license file is invalid.

Optionally, in still another possible implementation of this embodiment, the updating module is configured to: after that license authorization activation of the first device succeeds, update the cumulative running duration of the first device. The processing module 903 is further configured to record an updated cumulative running duration of the first device in the confidential file.

In addition, during specific hardware implementation, an embodiment of this application further provides a board device. The board device may be the device including the first service process in the foregoing embodiments, for example, the first device.

FIG. 10 is a schematic diagram of a structure of the board device. The device may include a processor 11, a memory 12, and at least one communication interface 13, where the processor 11, the memory 12, and the at least one communication interface 13 are coupled through a communication bus.

The processor 11 is a control center of the board device, and may be configured to complete the foregoing license startup and check procedure, execution and check of the license activation procedure, license authorization activation procedure, and confidential file writing procedure.

The processor 11 may include an integrated circuit (Integrated Circuit, IC), for example, may include a single packaged IC, or may include a plurality of connected packaged ICs with a same function or different functions. For example, the processor 11 may include a central processing unit (central processing unit, CPU), a digital signal processor (digital signal processor, DSP), or the like.

In addition, the processor 11 may alternatively include a hardware chip, and the hardware chip may be a logic circuit, an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable gate array (field-programmable gate array, FPGA), a generic array logic (generic array logic, GAL), or any combination thereof.

The memory 12 is configured to store and exchange various types of data or software. The memory 12 may include a plurality of storage media, and at least one storage medium may be used as the foregoing secure storage area, and is configured to store information such as a license file and a key file. In addition, the memory 12 may store a computer program or code.

Specifically, the memory 12 may include a volatile memory (volatile memory), for example, a random access memory (random access memory, RAM); or may include a non-volatile memory (non-volatile memory), for example, a flash memory (flash memory), a hard disk drive (hard disk drive, HDD), or a solid-state drive (Solid-State Drive, SSD). The memory 12 may alternatively include a combination of the foregoing types of memories.

Optionally, the memory 12 may be used as a storage medium and integrated into the processor 11, or may be configured outside the processor 11. This is not limited in this embodiment.

The communication interface 13 uses any apparatus such as a transceiver, and is configured to communicate with another device or a communication network, for example, an Ethernet, a radio access network, or a WLAN.

In addition, the board device alternatively includes a mobile communication module, a wireless communication module, and the like. The mobile communication module includes a module with a wireless communication function. In addition, the mobile communication module may further include a filter, a switch, a power amplifier, a low noise amplifier (low noise amplifier, LNA), and the like. In some embodiments, at least some function modules of the mobile communication module may be disposed in the processor. The wireless communication module may provide a wireless communication solution that is applied to a switch and includes a WLAN, Bluetooth (Bluetooth, BT), a global navigation satellite system (global navigation satellite system, GNSS), and the like.

It should be understood that the board device may alternatively include more or fewer other components. The schematic structure in this embodiment of this application does not constitute a specific limitation on the board device. In addition, the components shown in FIG. 10 may be implemented by hardware, software, firmware, or any combination thereof.

When the software is used to implement embodiments, all or some of embodiments may be implemented in a form of a computer program product. For example, functions of the parsing module 901, the obtaining module 902, and the processing module 903 in the license file management apparatus shown in FIG. 9 may be implemented by the processor 11, or the processor 11 and the memory 12, and functions of the storage unit in the file management apparatus may be implemented by the memory 12.

Specifically, the processor 11 is configured to: after obtaining a license file from a secure storage area of the memory 12, parse the license file and obtain license file information, where the license file information includes: a license authorization running duration, license authorization expiration, a first ESN, and the like.

The processor 11 is further configured to: read a cumulative running duration of a first device from a confidential file, where the cumulative running duration of the first device refers to a cumulative value of a valid running time of the first device that is used by a user within the license authorization expiration; and if it is determined that the cumulative running duration of the first device is within the license authorization running duration, verify authenticity of the first ESN; and when a verification result of the first ESN is true, determine that license authorization activation of the first device succeeds.

In the scenario in which the license file is activated, if the license file is successfully activated, the board device provided in this embodiment records the cumulative running duration of the license file in the confidential file, and an internal updating module of a license service in the board device updates and accumulates the cumulative running duration of the license file at an interval. In addition, the confidential file is stored in the secure storage area. Authentication is required for a writing operation. This prevents a user from bypassing a validity check of the license file by modifying a system time or deleting the confidential file.

In addition, the cumulative running duration of the device is recorded and periodically updated, and this information is written into the confidential file. The confidential file is stored in the secure storage area of the device. The authentication is required for the writing operation of the confidential file, and a common user does not have an authority to write or delete the confidential file. Therefore, in a license activation procedure and a procedure in which an automatic check is performed on expiry, whether the license file authorization expires is determined based on determining of whether the cumulative running duration of the license exceeds the valid running time rather than based on the system time of the device. This may not only prevent a vulnerability that the user reactivates an expired license file by modifying the system time to a range from a valid start time to a valid end time of the license, but also fix a vulnerability in an existing solution in which the user reactivates the expired license file by deleting the confidential file and changing the system time.

Time calibration is performed on a time of an operating system through a time synchronization module to prevent the user from maliciously modifying the system time. If the user maliciously kills a running process of the time synchronization module, because information such as version information of a license file that has been authorized or is being authorized, a quantity of valid use days of the license, and the cumulative running duration of the device is stored in the confidential file, the confidential file may also prevent the user from modifying the system time to extend the license authorization expiration and use the device for a long time.

An embodiment of this application further provides a computer program product. The computer program product includes one or more computer program instructions. When the computer program instructions are loaded and executed on a computer, the procedures or the functions according to the foregoing embodiments are all or partially generated. The computer may be a general-purpose computer, a dedicated computer, a computer network, or another programmable apparatus.

The computer program instructions may be stored in a computer-readable storage medium or may be transmitted from a computer-readable storage medium to another computer-readable storage medium. For example, the computer instructions may be transmitted from a network node, a computer, a server, or a data center to another node in a wired or wireless manner.

In addition, in the descriptions of this application, "a plurality of" means two or more than two unless otherwise specified. In addition, to clearly describe the technical solutions in embodiments of this application, in embodiments of this application, words such as "first" and "second" are used for distinguishing between same items or similar items that have basically same functions or purposes. A person skilled in the art may understand that the words such as "first" and "second" do not limit a quantity or an execution sequence, and the words such as "first" and "second" do not indicate a definite difference.

The foregoing descriptions are implementations of this application, but are not intended to limit the protection scope of this application.

## Claims

1. A license file management method, wherein the method comprises:
obtaining license file information by parsing a license file obtained from a secure storage area, wherein the license file information comprises: a license authorization running duration, license authorization expiration, and a first electronic serial number ESN;
reading a cumulative running duration of a first device from a confidential file, wherein the cumulative running duration of the first device refers to a cumulative value of a valid running time of the first device that is used by a user within the license authorization expiration; and
if the cumulative running duration of the first device is within the license authorization running duration, verifying authenticity of the first ESN, wherein
when a verification result of the first ESN is true, license authorization activation of the first device succeeds.

2. The method according to claim 1, wherein the verifying authenticity of the first ESN comprises:
determining whether a second ESN obtained from the secure storage area matches the first ESN; and
if the second ESN obtained from the secure storage area matches the first ESN, determining that the verification result of the first ESN is true.

3. The method according to claim 1 or 2, wherein before the reading a cumulative running duration of a first device from a confidential file, the method further comprises:
obtaining a system running time of the first device; and
determining whether the system running time of the first device is within the license authorization expiration; and if the system running time of the first device is within the license authorization expiration, reading the cumulative running duration of the first device from the confidential file.

4. The method according to any one of claims 1 to 3, wherein
if the cumulative running duration of the first device is not within the license authorization running duration, or when the verification result of the first ESN is false in a process of verifying the authenticity of the first ESN,
the license authorization activation of the first device fails.

5. The method according to any one of claims 1 to 3, wherein the reading a cumulative running duration of a first device from a confidential file comprises:
when determining that a license authorization activation procedure of the first device is non-first-time activation, reading the cumulative running duration of the first device from the confidential file.

6. The method according to claim 5, wherein the license file information further comprises license version information; and
the determining that a license authorization activation procedure of the first device is non-first-time activation comprises:
checking, based on the license version information in the license file information, whether the license authorization activation procedure of the first device is first-time activation; and
if the confidential file is stored in the secure storage area, and license version information recorded in the confidential file is consistent with the license version information in the license file information, determining that the license authorization activation procedure of the first device is the non-first-time activation.

7. The method according to claim 5, further comprising:
when determining that the license authorization activation procedure of the first device is first-time activation, creating a confidential file in the secure storage area, and storing the cumulative running duration of the first device in the created confidential file.

8. The method according to any one of claims 1 to 7, wherein before the obtaining license file information by parsing a license file obtained from a secure storage area, the method further comprises:
checking whether the license file is valid; and
when the license file is valid, parsing the license file obtained from the secure storage area to obtain the license file information.

9. The method according to claim 8, wherein the checking whether the license file is valid comprises:
performing signature verification on signature data by using a key obtained from the secure storage area, wherein the signature data is data obtained after the license file is encrypted; and
if a signature verification result is consistent with original data comprised in the license file, the license file is valid.

10. The method according to any one of claims 1 to 9, wherein after that license authorization activation of the first device succeeds, the method further comprises:
updating the cumulative running duration of the first device; and
recording an updated cumulative running duration of the first device in the confidential file.

11. A license file management apparatus, wherein the apparatus comprises:
a parsing module, configured to: obtain license file information by parsing a license file obtained from a secure storage area, wherein the license file information comprises: a license authorization running duration, license authorization expiration, and a first electronic serial number ESN;
an obtaining module, configured to read a cumulative running duration of a first device from a confidential file, wherein the cumulative running duration of the first device refers to a cumulative value of a valid running time of the first device that is used by a user within the license authorization expiration; and
a processing module, configured to: when the cumulative running duration of the first device is within the license authorization running duration, verify authenticity of the first ESN; and when a verification result of the first ESN is true, determine that license authorization activation of the first device succeeds.

12. The apparatus according to claim 11, wherein the processing module is further configured to determine whether a second ESN obtained from the secure storage area matches the first ESN; and if the second ESN obtained from the secure storage area matches the first ESN, determine that the verification result of the first ESN is true.

13. The apparatus according to claim 11 or 12, wherein
the obtaining module is further configured to: before reading the cumulative running duration of the first device from the confidential file, obtain a system running time of the first device, and determine whether the system running time of the first device is within the license authorization expiration; and if the system running time of the first device is within the license authorization expiration, read the cumulative running duration of the first device from the confidential file.

14. The apparatus according to any one of claims 11 to 13, wherein
the processing module is further configured to: when the cumulative running duration of the first device is not within the license authorization running duration, or when the verification result of the first ESN is false in a process of verifying the authenticity of the first ESN, determine that the license authorization activation of the first device fails.

15. The apparatus according to any one of claims 11 to 13, wherein
the processing module is further configured to: when determining that a license authorization activation procedure of the first device is non-first-time activation, read the cumulative running duration of the first device from the confidential file through the obtaining module.

16. The apparatus according to claim 15, wherein the license file information further comprises license version information; and
the processing module is further configured to: check, based on the license version information in the license file information, whether the license authorization activation procedure of the first device is first-time activation; and if the confidential file is stored in the secure storage area, and license version information recorded in the confidential file is consistent with the license version information in the license file information, determine that the license authorization activation procedure of the first device is the non-first-time activation.

17. The apparatus according to claim 16, wherein the processing module is further configured to: when determining that the license authorization activation procedure of the first device is the first-time activation, create a confidential file in the secure storage area, and store the cumulative running duration of the first device in the created confidential file.

18. The apparatus according to any one of claims 11 to 17, wherein the parsing module is further configured to: before obtaining the license file information by parsing the license file obtained from the secure storage area, check whether the license file is valid.

19. The apparatus according to claim 18, wherein
the parsing module is further configured to perform signature verification on signature data by using a key obtained from the secure storage area, wherein if a signature verification result is consistent with original data comprised in the license file, the license file is valid; and the signature data is data obtained after the license file is encrypted.

20. The apparatus according to any one of claims 11 to 19, further comprising:
an updating module, configured to: after that license authorization activation of the first device succeeds, update the cumulative running duration of the first device, wherein
the processing module is further configured to record an updated cumulative running duration of the first device in the confidential file.

21. Aboard device, comprising a processor and a memory, wherein the processor is coupled to the memory;
the memory is configured to store computer program instructions; and
the processor is configured to execute the instructions stored in the memory, so that the board device performs the method according to any one of claims 1 to 10.

22. A computer-readable storage medium, comprising instructions, wherein when the instructions are run on a computer, the computer is enabled to perform the method according to any one of claims 1 to 10.

23. A computer program product, wherein when the computer program product runs on a computer, the computer is enabled to perform the method according to any one of claims 1 to 10.
